# EUROPEAN PATENT APPLICATION

(11) **EP 4 603 467 A1**
(43) Date of publication of application: **20.08.2025**
(21) Application number: 25157247.5
(22) Date of filing: 11.02.2025
(51) Int. Cl.: C04B 35/565, C04B 35/628, C04B 35/80

(54) **MULTILAYER INTERFACE COATING WITH AL-SI-N PROTECTIVE LAYER**

(30) Priority: 13.02.2024 US 202418440225
(71) Applicant: RTX Corporation, Farmington, CT 06032 (US)
(72) Inventor: CALLAWAY, Evan B., East Hartford, 06118 (US); SUDRE, Olivier H., East Hartford, 06118 (US)
(74) Representative: Dehns

(57) **Abstract**

A coated fiber for use in a ceramic matrix composite (10) includes a ceramic fiber (12), and an interface coating arrangement (14) applied to and at least partially circumscribing the fiber (12). The interface coating arrangement (14) includes a first layer (18) in direct contact with the fiber (12), and a second layer (20) extending at least partially coaxially with and in direct contact with the first layer (18). The first layer (18) or the second layer comprises boron nitride and the other of the first layer or the second layer (20) comprises aluminum, silicon, and nitrogen.

## Description

### BACKGROUND

The present invention relates to ceramic matrix composites, and more particularly to the formation of corrosion-resistant coatings therein.

Fiber-reinforced ceramic matrix composites (CMCs) have been developed for the manufacture of components that are exposed to high temperatures, corrosive environments, and mechanical stress. CMCs are of particular interest in the aerospace industry and their use has been widely adopted for high temperature aircraft applications. While CMCs can provide desirable properties, they are susceptible to degradation. Over time, ceramic materials can form microcracks that expose the ceramic material to oxygen or other corrosive elements. To limit damage to fibers or through thickness cracks, fibers can be coated with one or more rigidized interface coating (IFC) layers, which can arrest and deflect cracks. While providing some protection, current interfacial coatings have limited oxidation resistance and/or stability at elevated temperatures and are susceptible to degradation over time. Accordingly, new protective materials and coating schemes with greater oxidation resistance and stability at high temperatures and in corrosive environments are desirable to enhance survivability of the CMC components during operation.

### SUMMARY

A coated fiber for use in a ceramic matrix composite includes a ceramic fiber, and an interface coating arrangement applied to and at least partially circumscribing the fiber. The interface coating arrangement includes a first layer in direct contact with the fiber, and a second layer extending at least partially coaxially with and in direct contact with the first layer. The first layer or the second layer comprises boron nitride and the other of the first layer or the second layer comprises aluminum, silicon, and nitrogen.

A coated fiber for use in a ceramic matrix composite includes a ceramic fiber, and an interface coating arrangement applied to and at least partially circumscribing the fiber. The interface coating arrangement includes a plurality of boron nitride layers, and a plurality of silicon aluminum nitride layers alternatingly disposed with the plurality of boron nitride layers.

A method of forming a ceramic matrix composite includes forming an interface coating arrangement (on) each of a plurality of ceramic fibers of a preform by forming at least one boron nitride layer, and forming at least one silicon aluminum nitride layer such that the at least one boron nitride layer and the least one silicon aluminum nitride layer are in direct contact. Forming the at least one silicon (aluminum) nitride layer is carried out via chemical vapor infiltration with tetrachlorosilane, aluminum chloride precursors, and ammonia. The method further includes densifying the preform with a ceramic matrix.

Features of embodiments are set forth in the dependent claims.

### BRIEF DESCRIPTION OF THE DRAWINGS

FIG. 1 is a simplified cross-sectional illustration of a ceramic fiber of a CMC with an interface coating arrangement.
FIG. 2 is a simplified cross-sectional illustration of a failure mechanism of the CMC of FIG. 1.
FIG. 3 is a simplified cross-sectional illustration of a ceramic fiber of a CMC with a first alternative interface coating arrangement.
FIG. 4 is a simplified cross-sectional illustration of a ceramic fiber of a CMC with a second alternative interface coating arrangement.
FIG. 5 is a flow chart illustrating select steps of an alternative method for forming a CMC with an interface coating arrangement.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents various fiber coating arrangements for improving mechanical, thermal, and/or oxidation resistance properties of CMCs.

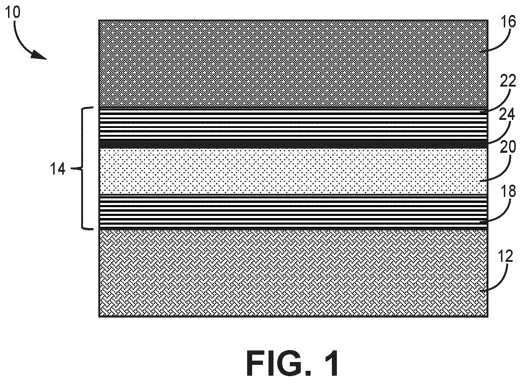

FIG. 1 is a simplified cross-sectional illustration of CMC 10 with fiber 12, interface coating arrangement 14, and matrix 16. CMC 10 can be suitable for use in, for example, a gas turbine engine. Although not visible in FIG. 1, fiber 12 is generally circumscribed by coating arrangement 14 and matrix 16, the various layers of coating arrangement 14 are coaxial with one another and fiber 12. Fiber 12 can be formed from silicon carbide (SiC) or other suitable ceramic material. Multiple fibers 12 of the encompassing CMC 10 can be arranged in various woven or non-woven, unidirectional or multidirectional architectures. Matrix 16 can be formed from SiC or other suitable ceramic material. When deposited, matrix 16 surrounds the outermost layer of coating arrangement 14, such that coating arrangement 14 is disposed radially between fiber 12 and matrix 16. In general, the layers of coating arrangement 14 are coaxial/coextensive with fiber 12. However, it should be understood that a given layer need not be completely coaxial/coextensive with the underlying fiber 12 for coating arrangement 14 to provide desirable protection to the encompassing CMC. That is, a given layer can have discontinuities and still be effective.

Beginning closest to fiber 12 and working outward toward matrix 16, interface coating arrangement 14 can include optional inner boron nitride (BN) layer 18, silicon aluminum nitride (Si-Al-N) layer 20, and outer BN layer 22. As used herein, the terms "inner" and "outer" are relative to one another and fiber 12, such that an outer layer (e.g., outer BN layer 22) is positioned further from fiber 12 than an inner layer (e.g., inner BN layer 18). If inner BN layer 18 is included, graphite layer 24 can also optionally be disposed between Si-Al-N layer 20 and outer BN layer 22 for reasons discussed in greater detail below. If inner BN layer 18 is omitted, Si-Al-N layer 20 can be deposited directly on fiber 12. Each of inner BN layer 18 and outer BN layer 22 can have a thickness ranging from 50 nm to 200 nm, and in one embodiment, 50 nm to 100 nm. Si-Al-N layer 20 can have a thickness ranging from 50 nm to 300 nm, and in one embodiment, 50 nm to 200 nm. Graphite layer 24 can have a thickness ranging from 20 nm to 50 nm. Inner BN layer 18 and outer BN layer 22 can be deposited as a predominantly crystalline structure of hexagonal BN (h-BN) with the B-N basal planes predominantly aligned with the longitudinal axis of the underlying fiber 12. Si-Al-N layer 20 can be deposited as an amorphous (i.e., non-crystalline or glassy) layer. It has been observed that amorphous microstructures can advantageously facilitate h-BN formation in a bordering BN layer (e.g., inner BN layer 18 or outer BN layer 22).

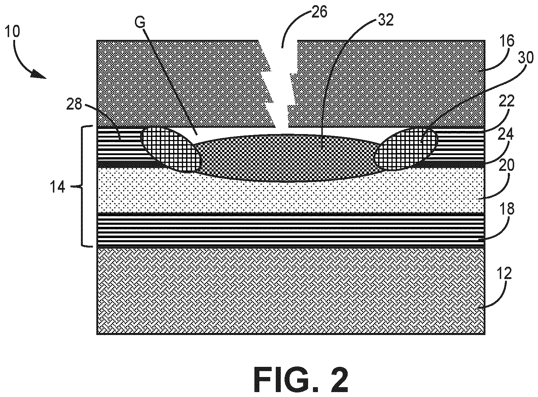

FIG. 2 is a simplified cross-sectional illustration of CMC 10 showing the failure mechanism of CMC 10 under operational conditions. In an operational environment, as cracks form and propagate through matrix 16 and into interface coating arrangement 14, outer BN layer 22 can deflect cracks away from Si-Al-N layer 20 and become debonded. As such, FIG. 2 shows matrix crack 26 and debond crack 28 within outer BN layer 22. Debonding of outer BN layer 22 is facilitated by the crystalline nature of h-BN, which is predominantly aligned in direction of debond crack 28. Graphite layer 24, if included, can facilitate the preferential debonding of outer BN layer 22 over inner BN layer 18, as it weaker than outer BN layer 22 and will also become debonded.

Matrix cracks 26 (only one is shown in FIG. 2) expose outer BN layer 22 and Si-Al-N layer 20 to oxygen and water vapor. Outer BN layer 22 oxidizes, transforming to a low viscosity glass with boria which progressively volatilizes. This can lead to formation of gap G at the border between matrix 16 and outer BN layer 22. Oxidation of adjacent matrix 16 contributes silicon into glassy regions 30, forming a borosilicate glass. Then, as Si-Al-N layer 20 oxidizes, aluminum, nitrogen, and additional silicon can become incorporated glassy regions 30. Nitrogen in particular imparts nitride glass-like properties to glassy regions 30, such as increased glass transition temperature (T_{g}), increased viscosity, and increased crack growth resistance, to name a few examples. As boron further volatilizes, glassy regions 30 can become solidified regions of predominantly aluminum, silicon, and oxygen, preventing further recession of outer BN layer 22. Glassy regions 30 can evolve into partially crystalline phases such as mullite, forming mullite region 32. Mullite region 32, being a stable mixture with silica (SiO₂), alumina (Al₂O₃), and some nitrogen, forms around matrix crack 26 from oxidation of exposed Si-Al-N layer 20. Mullite region 32 has increased resistance to water vapor as compared to silica alone, and acts to seal matrix crack 26 to protect underlying layers (e.g., inner BN layer 18) and fiber 12.

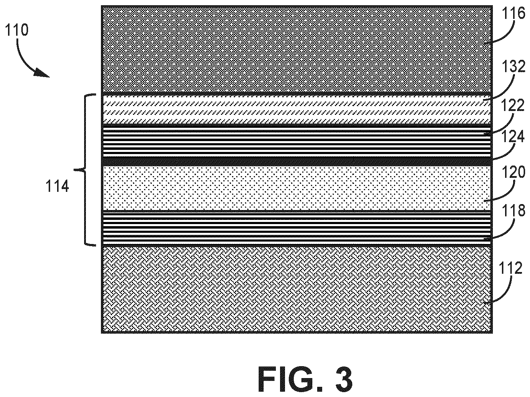

FIG. 3 is a cross-sectional illustration of CMC 110 with fiber 112, interface coating arrangement 114, and matrix 116. CMC 110 is substantially similar to CMC 10 of FIGS. 1 and 2, except with minor modifications to coating arrangement 114. More specifically, coating arrangement 114 can include optional inner BN layer 118, Si-Al-N layer 120, outer BN layer 122, optional graphite layer 124, and silicon-doped boron nitride (SiBN) layer 132 as the outermost layer. Inner BN layer 118, Si-Al-N layer 120, outer BN layer 122, and graphite layer 124 can all have substantially similar roles and characteristics (i.e., composition, thickness, etc.) as those described above with respect to FIGS. 1 and 2. In an operational environment, SiBN layer 132 can increase the silicon content of coating arrangement 114, oxidizing to form, with any of boron, aluminum, nitrogen, and/or oxygen, a more stable glassy materials. SiBN layer 132 can have a thickness ranging from 50 nm to 400 nm, and in one embodiment, 50 nm to 200 nm.

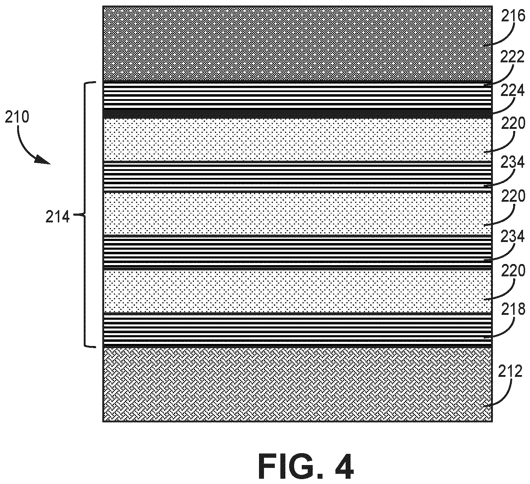

FIG. 4 is a cross-sectional illustration of CMC 210 with fiber 212, interface coating arrangement 214, and matrix 216. CMC 210 is substantially similar to CMCs 10 and 110 of FIGS. 1 to 3, except with minor modifications to coating arrangement 214. More specifically, coating arrangement 214 can include optional innermost BN layer 218 and outermost BN layer 222 with multiple Si-Al-N layers 220 and at least one intermediate BN layer 234 therebetween. As such, coating arrangement 214 can include *n* number of BN layers and *m* number of Si-Al-N layers, where *n* and/or *m* can range from 2 to 8, and in an exemplary embodiment, from 3 to 5. As with coating arrangements 14 and 114, optional graphite layer 224 and/or an outermost SiBN layer (not shown in FIG. 4) can be included, and can have substantially similar roles and characteristics (i.e., composition, thickness, etc.) as those described above with respect to FIGS. 1 to 3. BN layers 218, 222, and 234 can be substantially similar to one another and can each have substantially similar roles and characteristics (i.e., composition, thickness, etc.) as those described above with respect to FIGS. 1 to 3. Si-Al-N layers 220 can also be substantially similar to one another and can each have substantially similar roles and characteristics (i.e., composition, thickness, etc.) as those described above with respect to FIGS. 1 to 3. With coating arrangement 214 having multiple layers of BN and Si-Al-N, the outermost and intermediate layers of BN and Si-Al-N can protect the inner innermost layers and fiber 12 for hundreds of hours of oxidation.

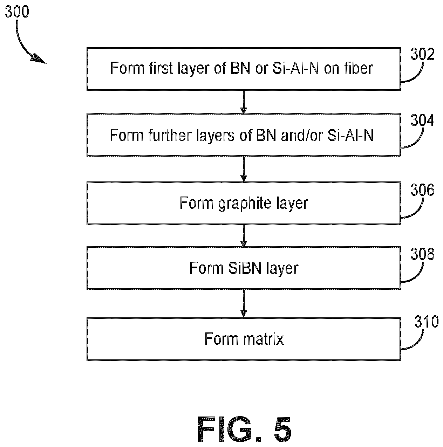

FIG. 5 is a method flowchart illustrating steps 302 to 310 of method 300 for forming a CMC, such as CMC 10, 110, and/or 210, with interface coating arrangements 14, 114, and/or 214. At step 302, a first/inner layer (i.e., either an optional inner BN layer or an Si-Al-N layer) can be to fibers 12, 112, and/or 212 of a preform using chemical vapor infiltration (CVI) or other suitable process. A first layer of BN can be formed with the predominantly h-BN species using suitable CVI process parameters. Such parameters can be used to form any subsequent BN layers. A first layer of Si-Al-N can be formed with tetrachlorosilane (SiCl₄), aluminum chloride (AlCl₃) precursors in the presence of gaseous ammonia (NH₃). Subsequent layers of Si-Al-N, or any other Si and/or Al-bearing precursors, can be formed in the same manner.

At step 304, a second layer of BN or Si-Al-N, and any additional layers of BN or Si-Al-N in a multilayer coating arrangement, can be formed over the first layer and subsequent layers. The second and further layers can alternate between BN and Si-Al-N and be formed in the manner discussed above with respect to step 302.

At step 306, a graphite layer, if desired, can be formed, using CVI, on the outermost layer of Si-Al-N before the formation of the outer/outermost BN layer at step 308. At step 310, an SiBN layer, if desired, can be formed over the outer/outermost BN layer using CVI.

At step 310, matrix 16, 116, and/or 216 can be formed on fibers and encompassing coating arrangements within the preform. The matrix can be deposited using CVI, which can be carried out until the resulting CMC has reached the desired residual porosity. Other techniques for matrix formation are contemplated herein, such as one or a combination of CVI/CVD, slurry infiltration, melt infiltration, and polymer infiltration and pyrolysis. Protective coatings for the CMC (e.g., thermal barrier coatings, environmental barrier coatings, etc.) can optionally be applied after step 310.

A CMC component formed with the disclosed interface coating arrangements can be incorporated into aerospace, maritime, or industrial equipment, to name a few, non-limiting examples.

### Discussion of Possible Embodiments

The following are non-exclusive descriptions of possible embodiments of the present invention.

A coated fiber for use in a ceramic matrix composite includes a ceramic fiber, and an interface coating arrangement applied to and at least partially circumscribing the fiber. The interface coating arrangement includes a first layer in direct contact with the fiber, and a second layer extending at least partially coaxially with and in direct contact with the first layer. The first layer or the second layer comprises boron nitride and the other of the first layer or the second layer comprises aluminum, silicon, and nitrogen.

The coated fiber of the preceding paragraph can optionally include, additionally and/or alternatively, any one or more of the following features, configurations and/or additional components:
In the above coated fiber, the first layer can include boron nitride and the second layer can include aluminum, silicon, and nitrogen.

In any of the above coated fibers, the interface coating arrangement can further include: a third layer surrounding the second layer, the third layer including boron nitride.

In any of the above coated fibers, the interface coating arrangement can further include: a fourth layer disposed between and in direct contact with each of the second layer and the third layer, the fourth layer including graphite.

In any of the above coated fibers, the interface coating arrangement can further include: a fifth layer extending at least partially coaxially with and in direct contact with the third layer, the fifth layer including silicon-doped boron nitride.

In any of the above coated fibers, the boron nitride can include hexagonal boron nitride.

A ceramic matrix composite can include a plurality of the above coated fibers, and a silicon carbide matrix formed upon the fiber (or interface) coating arrangement of the plurality of the above coated fibers.

A coated fiber for use in a ceramic matrix composite includes a ceramic fiber, and an interface coating arrangement applied to and at least partially circumscribing the fiber. The interface coating arrangement includes a plurality of boron nitride layers, and a plurality of silicon aluminum nitride layers alternatingly disposed with the plurality of boron nitride layers.

The coated fiber of the preceding paragraph can optionally include, additionally and/or alternatively, any one or more of the following features, configurations and/or additional components:
In the above coated fiber, one of the plurality of silicon aluminum nitride layers can be in direct contact with the ceramic fiber.

In any of the above coated fibers, one of the plurality of boron nitride layers can be in direct contact with the ceramic fiber.

In any of the above coated fibers, the plurality of boron nitride layers can include three to five boron nitride layers.

In any of the above coated fibers, the plurality of silicon aluminum nitride layers can include three to five silicon aluminum nitride layers.

In any of the above coated fibers, the interface coating arrangement can further include: a graphite layer disposed between and in direct contact with one of the plurality of boron nitride layers and one of the plurality of silicon aluminum nitride layers.

In any of the above coated fibers, the interface coating arrangement can further include: a silicon-doped boron nitride layer as an outermost layer of the interface coating arrangement.

A method of forming a ceramic matrix composite includes forming an interface coating arrangement (on) each of a plurality of ceramic fibers of a preform by forming at least one boron nitride layer, and forming at least one silicon aluminum nitride layer such that the at least one boron nitride layer and the least one silicon aluminum nitride layer are in direct contact. Forming the at least one silicon (aluminum) nitride layer is carried out via chemical vapor infiltration with tetrachlorosilane, aluminum chloride precursors, and ammonia. The method further includes densifying the preform with a ceramic matrix.

The method of the preceding paragraph can optionally include, additionally and/or alternatively, any one or more of the following features, configurations and/or additional steps:
In the above method, forming the interface coating can further include: forming a graphite layer between the at least one boron nitride layer and the at least one silicon aluminum nitride layer.

In any of the above methods, forming the interface coating can further include: forming a silicon-doped boron nitride layer as an outermost layer of the interface coating arrangement.

In any of the above methods, the at least one boron nitride layer can include three to five boron nitride layers.

In any of the above methods, the at least one silicon aluminum nitride layer can include three to five silicon aluminum nitride layers.

In any of the above methods, the at least one boron nitride layer can include hexagonal boron nitride.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A coated fiber for use in a ceramic matrix composite (10; 110; 210), the coated fiber comprising:
a ceramic fiber (12; 112; 212); and
an interface coating arrangement (14; 114; 214) applied to and at least partially circumscribing the fiber (12; 112; 212), the interface coating arrangement (14; 114; 214) comprising:
a first layer (18; 118; 218; 20; 120; 220) in direct contact with the fiber (12; 112; 212); and
a second layer (20; 120; 220; 22; 122; 234) extending at least partially coaxially with and in direct contact with the first layer (18; 118; 218; 20; 120; 220),
wherein the first layer (18; 118; 218) or the second layer (22; 122; 234) comprises boron nitride and the other of the first layer (20; 120; 220) or the second layer (20; 120; 220) comprises aluminum, silicon, and nitrogen.

2. The coated fiber of claim 1, wherein the first layer (18; 118; 218) comprises boron nitride and the second layer (20; 120; 220) comprises aluminum, silicon, and nitrogen.

3. The coated fiber of claim 2, wherein the interface coating arrangement (14; 114; 214) further comprises: a third layer (22; 122; 234) surrounding the second layer (20; 120; 220), the third layer (22; 122; 234) comprising boron nitride.

4. The coated fiber of claim 3, wherein the interface coating arrangement (14; 114; 214) further comprises: a fourth layer (24; 124; 224) disposed between and in direct contact with each of the second layer (20; 120; 220) and the third layer (22; 122; 234), the fourth layer (24; 124; 224) comprising graphite.

5. The coated fiber (110) of claim 3 or 4, wherein the interface coating arrangement (114) further comprises: a fifth layer (132) extending at least partially coaxially with and in direct contact with the third layer (122), the fifth layer (132) comprising silicon-doped boron nitride.

6. The coated fiber of any preceding claim, wherein the boron nitride comprises hexagonal boron nitride.

7. The coated fiber (210) of claim 1, wherein the interface coating arrangement (214) comprises:
a plurality of boron nitride layers (218; 222; 234), including one of the first layer or the second layer; and
a plurality of silicon aluminum nitride layers (220) alternatingly disposed with the plurality of boron nitride layers (218; 222; 234) and including the other of the first layer (220) or the second layer (220).

8. The coated fiber of claim 7, wherein:
the plurality of boron nitride layers (218; 222; 234) comprises three to five boron nitride layers (218; 222; 234); and/or
the plurality of silicon aluminum nitride layers (220) comprises three to five silicon aluminum nitride layers (220).

9. The coated fiber of claim 7 or 8, wherein the interface coating arrangement (214) further comprises: a graphite layer (224) disposed between and in direct contact with one of the plurality of boron nitride layers (218; 222; 234) and one of the plurality of silicon aluminum nitride layers (220).

10. The coated fiber of any preceding claim, wherein the interface coating arrangement (114; 214) further comprises: a silicon-doped boron nitride layer (132; 222) as an outermost layer (132; 222) of the interface coating arrangement (114; 214).

11. A ceramic matrix composite (10; 110 ; 210) comprising:
a plurality of coated fibers (12; 112; 212) of any preceding claim; and
a silicon carbide matrix (16; 116; 216) formed upon the interface coating arrangement (14; 114; 214) of the plurality of coated fibers (12; 112; 212).

12. A method of forming a ceramic matrix composite (10; 110; 210), the method comprising:
forming an interface coating arrangement (14; 114; 214) on each of a plurality of ceramic fibers (12; 112; 214) of a preform by:
forming at least one boron nitride layer (18; 22; 118; 122; 132; 218; 222; 234); and
forming at least one silicon aluminum nitride layer (20; 120; 220) such that the at least one boron nitride layer (18; 22; 118; 122; 132; 218; 222; 234) and the least one silicon aluminum nitride layer (20; 120; 220) are in direct contact,
wherein forming the at least one silicon aluminum nitride layer (20; 120; 220) is carried out via chemical vapor infiltration with tetrachlorosilane, aluminum chloride precursors, and ammonia; and
densifying the preform with a ceramic matrix (16; 116; 216).

13. The method of claim 12, wherein forming the interface coating arrangement (14; 114; 214) further comprises:
forming a graphite layer (24; 124; 224) between the at least one boron nitride layer (22; 122; 222) and the at least one silicon aluminum nitride layer (20; 120; 220); and/or
forming a silicon-doped boron nitride layer (132; 222) as an outermost layer (132; 222) of the interface coating arrangement (14; 214).

14. The method of claim 12 or 13, wherein:
the at least one boron nitride layer (218; 222; 234) comprises three to five boron nitride layers (218; 222; 234); and/or
the at least one silicon aluminum nitride layer (220) comprises three to five silicon aluminum nitride layers (220).

15. The method of any of claims 12 to 14, wherein the at least one boron nitride layer (18; 22; 118; 122; 132; 218; 222; 234) comprises hexagonal boron nitride.
